# EUROPÄISCHE PATENTANMELDUNG

(11) **EP 0 855 243 A2**
(43) Veröffentlichungstag der Anmeldung: **29.07.1998**
(21) Anmeldenummer: 98101204.0
(22) Anmeldetag: 23.01.1998
(51) Int. Cl.: B23Q 1/00, B23Q 7/14, B23Q 16/00, B23Q 16/02, B23Q 16/04, B23Q 16/08

(54) **Haltevorrichtung insbesondere für ein Werkstück**

(30) Priorität: 23.01.1997 DE 19702227
(71) Anmelder: System 3R International AB, 162 50 Vällingby (SE)
(72) Erfinder: Nordquist, Hakon, 187 75 Täby (SE)
(74) Vertreter: Zinngrebe, Horst, Dr.rer.nat.

(57) **Zusammenfassung**

Beschrieben wird eine Haltevorrichtung mit an einem Gehäuse angeordneten, als lösbare Sperre wirkenden Klemmelementen (18, 118, 218, 318), die durch eine Axialbewegung eines Druckglieds (20, 120, 220, 320) radial bewegbar sind, wobei das sich in das Gehäuse erstreckende Druckglied von einem ersten und einem zweiten Druckmittel axial beaufschlagbar ist und das zweite Druckmittel auf das Druckglied entgegengesetzt zum ersten Druckmittel einwirkt. Damit die Haltevorrichtung wesentlich vereinfacht wird, ist vorgesehen, daß in dem Gehäuse (2, 102, 202, 302) zwei durch eine abschnittsweise axial bewegliche und am Gehäuse verankerte Membran (7) getrennte und axial hintereinander angeordnete Kammern (8, 108, 208, 308; 9, 109, 209, 309) ausgebildet sind, wobei das Druckglied mit der Membran verbunden ist und wenigstens eine der Kammern (9, 109, 209, 309) an eine Mediumdruckquelle anschließbar ist.

## Beschreibung

Die Erfindung betrifft eine Haltevorrichtung mit an einem Gehäuse angeordneten Klemmelementen, die durch eine Axialbewegung eines Druckgliedes radial bewegbar sind, wobei das sich in des Gehäuse erstreckende Druckglied von einem ersten und einem zweiten Druckmittel axial beaufschlagbar ist und das zweite Druckmittel auf das Druckglied entgegengesetzt zum ersten Druckmittel einwirkt.

In der Schrift EP-A-0255 042 ist eine Haltevorrichtung in Form eines an einer Werkzeugmaschine, beispielsweise einer Elektroerosionsmaschine befestigbaren Spannfutters beschrieben, mit welcher ein Werkstück oder Werkzeug gehalten werden kann. Dazu greift ein mit dem Werkstück kuppelbarer Zugbolzen in eine Öffnung des Spannfutters ein, in welchem der Zugbolzen mittels eines Kugelgesperres unter der Wirkung von Druckfedern gehalten und mittels den Druckfedern entgegenwirkender Druckluft gelöst werden kann.

Bei der aus der Schrift EP-A-0614725 bekannten Haltevorrichtung steht aus dem zu haltenden Werkstück ein Zapfen vor, der von einem in einem Gehäuse der Haltevorrichtung angeordneten Kugelsperre ergriffen werden kann. Die Kugelsperre ergreift den Zapfen unter der Wirkung von auf ein Druckglied einwirkenden Druckfedern, wobei zum Lösen des Werkstückes das Druckglied mit gegen die Druckfedern wirkender Druckluft beaufschlagt wird.

Der Erfindung liegt die Aufgabe zugrunde, die eingangs erwähnte Haltevorrichtung wesentlich zu vereinfachen. Dazu ist erfindungsgemäß vorgesehen, daß in dem Gehäuse zwei durch eine abschnittsweise axial bewegliche und am Gehäuse verankerte Membran getrennte axial hintereinander angeordnete Kammern ausgebildet sind, wobei das Druckglied mit der Membran verbunden ist und wenigstens eine der Kammern an eine Mediumdruckquelle anschließbar ist. Damit kann die Haltevorrichtung insgesamt wesentlich flacher ausgeführt werden, wobei auch die Herstellungskosten sehr niedrig liegen. Ferner ist die Ansprechzeit des Druckgliedes auf das erste oder zweite Druckmittel außerordentlich kurz, so daß das Klemmen und Lösen eines Werkstückes an beziehungsweise von der erfindungsgemäßen Haltevorrichtung sehr schnell und kräftig erfolgt.

Die Membran besteht zweckmäßig aus einer Scheibe oder einem Ring aus flexiblem Kunststoff, beispielsweise Gummi. Außerdem empfiehlt es sich, das Druckstück in dem Gehäuse, zweckmäßig in einem in das Gehäuse eingesetzten Rohrstück, axial zu führen. Das Druckstück kann aus einem zylindrischen Kolben bestehen, an dessen freiem Ende Konusflächen ausgebildet sind, gegen welche die Klemmelemente anliegen. Vorteilhafterweise ist am Fuß des Kolbens eine die Kammern fast ganz radial ausfüllende Platte angebracht, wobei die am Gehäuse eingeklemmte Membran am Rand der Platte befestigt ist. Zwischen einem Kammerboden und der Plattenunterseite kann dann eine Tellerfeder als Druckmitte 1 eingespannt sein.

Die Erfindung läßt sich besonders günstig dahingehend weiterentwickeln, daß unter Verwendung eines Hilfskolbens bzw. eines weiteren Stempels der Lösedruck wesentlich erhöht werden kann. Obgleich das Werkstück mit sehr hohem Druck mittels der erfindungsgemäßen Haltevorrichtung gehalten werden kann, sorgt der erhöhte Lösedruck für ein rasches und problemloses Freigeben des Werkstückes, ohne daß Verklemmungen oder dergleichen auftreten. Die Erfindung ermöglicht einen Hub des Druckgliedes zwischen Halten und Lösen von nur etwa 1-3 mm.

Die Erfindung wird nachstehend anhand der in der beigefügten Zeichnung dargestellten Ausführungsbeispiele im einzelnen beschrieben. Es zeigen:
- Fig. 1:: einen schematischen Axialschnitt durch ein Futter, das zum Halten einer Palette an einer Elektroerosionsmaschine befestigt werden kann;
- Fig. 2:: einen schematischen Axialschnitt durch eine weitere Ausführungsform des Futters;
- Fig. 3:: einen schematischen Axialschnitt durch eine dritte Ausführungsform des Futters;
- Fig. 4:: einen schematischen Axialschnitt durch eine vierte Ausführungsform des Futters; und
- Fig. 5:: einen Axialschnitt durch eine weitere Ausführungsform der Erfindung.

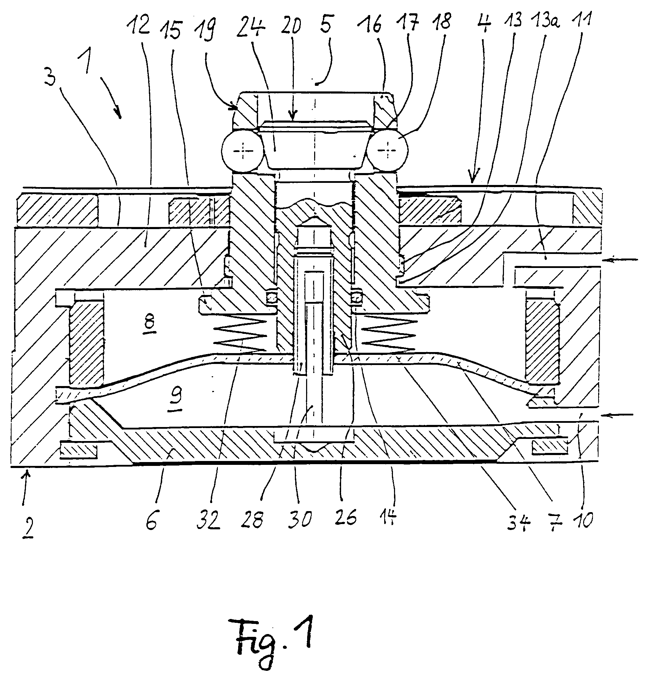

Das im Ganzen mit 1 bezeichnete Futter nach Fig. 1 besitzt ein Gehäuse 2 beispielsweise aus Werkzeugsstahl, dessen Mittelachse mit 5 bezeichnet ist. Auf der Oberseite 3 des zylindrischen oder rechteckigen Gehäuseblocks 2 sind im Ganzen mit 4 bezeichnete Referenzelemente in Form von Nuten oder nicht dargestellten Zapfen ausgebildet, die dazu bestimmt sind, mit Gegenreferenzelementen auf der Unterseite einer nicht dargestellten Palette zu deren exakten, wiederholbaren Positionierung relativ zum Gehäuseblock 2 in einem räumlichen Orthogonalsystem zusammenzuwirken, dessen X-Y-Ebene beispielsweise parallel zur Oberseite 3 und dessen Z-Achse in der Mittellinie 5 liegen. Derartige Referenzelemente und Gegenreferenzelemente sind an sich beispielsweise aus dem Dokument EP-A-0255042 bekannt, so daß sie hier nicht näher dargestellt und beschrieben sind.

An der der Oberseite 3 gegenüberliegenden Seite ist der Gehäuseblock 2 durch eine Platte 6 verschlossen. Der hohle Innenraum des Gehäuseblocks 2 ist durch eine axial, d.h. in Richtung der Mittellinie 5 bewegliche und in den Seitenwänden des Gehäuseblocks 2 verankerte Membran 7 in eine vordere Kammer 8 und eine hintere Kammer 9 unterteilt. Die hintere Kammer 9 besitzt eine in das Äußere des Gehäuseblocks 2 führende Durchgangsbohrung 10, über welche die hintere Kammer 9 an eine nicht dargestellte Druckluftquelle über gegeignete Steuermittel angeschlossen werden kann.

Entsprechend führt aus der vorderen Kammer 8 eine weitere, durch die Seitenwand des Gehäuseblocks 2 geführte Durchgangsbohrung 11 in das Äußere des Gehäuseblocks 2, so daß die vordere Kammer 8 über die Durchgangsbohrung 11 ebenfalls über geeignete Steuermittel an eine Druckluftquelle anschließbar ist.

In eine zur Mittellinie 5 symmetrische Durchgangsbohrung durch die die Oberseite 3 bildende Stirnplatte 12 des Gehäuseblocks 2 ist ein dickwandiges Rohrstück 19 eingesetzt, welches mit einem inneren, radial vorstehenden Ringbund 15 die Innenfläche der Stirnplatte 12 hinterfaßt. Das Rohrstück 19 steht aus der Oberseite 3 sowie über die Referenzelemente 4 um einen Abschnitt 16 nach außen vor, in welchen mehrere in Umfangsrichtung gleich beabstandete Radialbohrungen eingebracht sind. Eine dieser Radialbohrungen ist mit 17 bezeichnet. In jeder dieser Radialbohrungen 17 ist je eine Kugel, etwa die Kugel 18 in der Radialbohrung 17, radial beweglich so eingefangen, daß keine der Kugeln 18 ihre zugehörige Radialbohrung nach radial außen verlassen kann.

Im übrigen ist das Rohrstück 19 in der Durchgangsbohrung dadurch verdrehsicher und beschränkt axial gegen die Wirkung der Druckfedern 32, 34 verschiebbar gehalten, daß aus dem Rohrstück 19 radial vorstehende Nasen 13 in kurze Längsschlitze 13a in der Wandung der Durchgangsborung eintauchen.

In dem Zentralkanal des Rohrstücks 19 ist ein Kolben 20 axial verschieblich geführt und mittels einer in eine Ringnut des Rohrstücks 19 eingesetzten Ringdichtung 14 gegen die vordere Kammer 8 abgedichtet. Der verbreitete Kopf des Kolbens 20 befindet sich in einer radialen Erweiterung des Zentralkanals und ist an seiner Peripherie zu einem sich nach außen erweiternden Konus 24 ausgebildet. Jede der Kugeln 18 liegt, wie in Fig. 1 eingezeichnet ist, an dem Konus 24 derart an, daß bei einer Einwärtsbewegung des Kolbens 20 in der Kammer 8 die Kugeln 18 nach radial außen gedrängt werden und bei einer Auswärtsbewegung des Kolbens 20 die Kugeln 18 in ihren Radialbohrungen 17 radial einwärts bewegt werden können. Damit bilden das Rohrstück 19 mit Radialbohrungen 17, die Kugeln 18 und der Kolben 20 ein Kugelgesperre.

Das innere Ende des Kolbenschaftes 26 ist mit der Oberseite der Membran 7 verbunden, wobei eine in den Kolbenschaft 26 eingelassene Hülse 28 sich durch eine zentrale Öffnung in der Membran 7 erstereckt. Die Hülse 28 umfaßt einen an der Platte 6 mittig befestigten, aufrechtstehenden Finger 30, so daß der Kolben 20 bei seinen Axialbewegungen in Richtung der Mittelachse 5 nicht nur durch den Zentralkanal des Vorstücks 14, sondern auch durch den Finger 30 geführt ist.

Um den inneren Endabschnitt des Kolbenschaftes 26 herum sind in Umfangsrichtung gleich beabstandet mehrere bereits erwähnte Druckfedern 32, 34 angeordnet, von denen jede sich auf der Oberseite der Membran 7 abstützt und gegen die Unterseite des Ringbundes 15 anliegt.

Wenn in der vorderen Kammer 8 und in der hinteren Kammer 9 gleicher Luftdruck herrscht, ziehen die Druckfedern 32, 34 die Membran 7 mit an ihr befestigtem Kolben 20 nach innen mit der Folge, daß die Kugeln 18 radial auswärts gedrängt werden. Weist die mit dem Futter 1 zu verbindende Palette beispielsweise eine Bohrung auf, deren lichte Weite etwa dem Durchmesser eines um die Kugeln 18 gelegten Außenkreises entspricht, befindet sich das Futter bei den genannten Druckverhältnissen in der optimalen Halteposition, wobei die Kugeln 18 die Palette durch Anlage an etwa in der genannten Bohrung ausgebildete konische Flächen hält.

Zum Öffnen des Futters, d.h. zur Freigabe der Palette wird die hintere Kammer 9 mit Druckluft aus der genannten Druckluftquelle geladen, die zur Überwindung der Haltekraft der Druckfedern 32, 34 den mittleren Abschnitt der Membran 7 und damit den Kolben 20 auswärts drängt, so daß die Kugeln 18 radial einwärts ausweichen können.

Die Haltekraft des Futters 1 wird dadurch erhöht, daß die vordere Kammer 8 mit Druckluft beaufschlagt wird, die die Haltekraft des Kolbens 20 über die von den Druckfedern 32, 34 entwickelte Haltekraft hinaus erhöht.

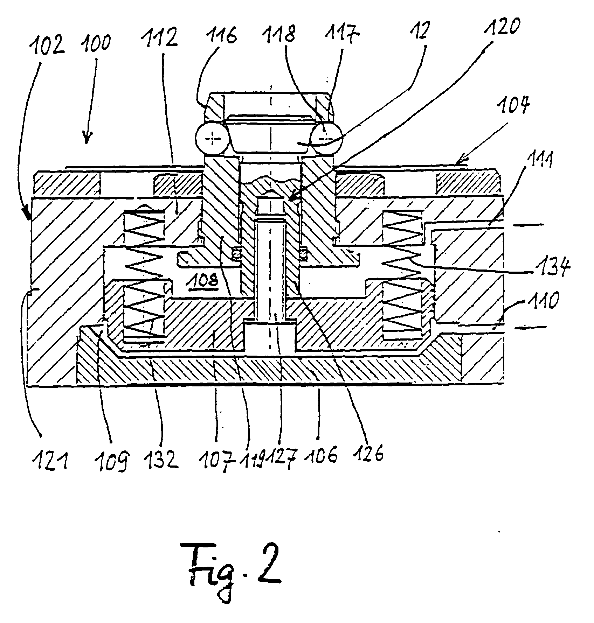

Das zweite Ausführungsbeispiel der Erfindung nach Fig. 2 unterscheidet sich von dem vorstehend beschriebenen Ausführungsbeispiel im wesentlichen dadurch, daß die Membran 7 durch einen sich über mehrere Druckfedern 132, 134 an der Stirnplatte 112 abstützenden Schubkolben 107 ersetzt ist, an dessen zentralem Abschnitt der Kolbenschaft 126 mittels eines Bolzens 127 verankert ist. Der Schubkolben 107 ist längs der Innenwände des Mantels 121 des Gehäuseblocks 102 des im Ganzen mit 100 bezeichneten Futters axial verschieblich und grenzt damit die vordere Kammer 108 gegen die hintere Kammer 109 ab. Da sich die Druckfedern 132, 134 an der Stirnplatte 112 abstützen, muß in der vorderen Kammer 108 stets ein gewisser Luftdruck herrschen, um zu verhindern, daß das Rohrstück 119 sich in das Innere des Gehäuseblocks 102 unter der Wirkung einer über die Kugeln 118 geschobenen Palette zurückweicht. Andererseits liegt es natürlich im Rahmen der Erfindung, an dem Außenabschnitt 116 des Rohrstücks 119 einen radial vorstehenden Ringkranz anzubringen, der das Ausweichen des Rohrstücks 114 in das Innere des Gehäuseblocks 102 verhindert. Im übrigen wirkt der in der vorderen Kammer 108 vorhandene Luftdruck unterstützend für die von den Druckfedern 132, 134 entwickelte Haltekraft.

Zum Lösen wird wie bei dem vorher beschriebenen Ausführungsbeispiel die hintere Kammer 109 mit hinreichendem Luftdruck beaufschlagt, so daß der Schubkolben 107 mit Kolben 120 auswärts bewegt werden und den Kugeln 118 eine radial einwärts gerichtete Ausweichbewegung ermöglichen.

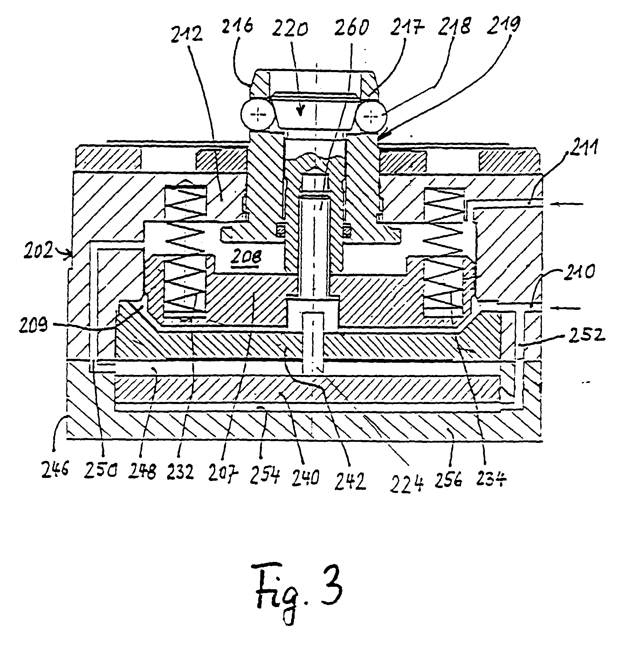

Bei dem in Fig. 3 dargestellten dritten Ausführungsbeispiel der Erfindung wird die Haltekraft dadurch erhöht, daß die wirksame Fläche des Schubkolbens 207 um die wirksame Fläche eines Hilfskolbens 240 vergrößert wird, der koaxial hinter dem Schubkolben 207 angeordnet und mit diesem über einen eine Zwischenplatte 242 durchdringenden Zapfen 224 verbunden ist. Druckfedern 232, 234 stützen sich einerseits an der Stirnplatte 212 andererseits am Schubkolben 207 ab. Im übrigen ist der Hilfskolben 240 in einem die Platte 6 ersetzenden Ansatz 246 des Gehäuseblocks 202 so untergebracht, daß zwischen der Unterseite der Zwischenplatte 242 und der Oberseite des Hilfskolbens 240 eine Zwischenkammer 248 verbleibt, welche über einen Druckluftkanal 250 mit der vorderen Kammer 208 kommuniziert.

Über einen weiteren Druckluftkanal 252 kommuniziert die hintere Kammer 209 mit einer Hilfskammer 254, welche sich zwischen der Unterseite des Hilfskolbens 240 und der Abschlußplatte 256 des Ansatzes 246 erstreckt.

Die hintere Kammer 209 und der Druckluftkanal können über einen Druckluftanschluß 210 und die vorerde Kammer 208 kann über einen Druckluftanschluß 211 jeweils über nicht dargestelle Steuereinrichtungen mit einer Druckluftquelle verbunden werden.

Die Erhöhung der Haltekraft wird dadurch erreicht, daß bei Druckbeaufschlagung der vorderen kammer 208 gleichzeitig die Zwischenkammer 248 mit dem gleichen Druck beaufschlagt wird mit der Folge, daß der Hilfskolben 240 den Schubkolben 207, mit welchem er über den Zapfen 224 verbunden ist, weiter einwärts zieht, wobei diese Zugkraft von den beiden Kolben über einen Bolzen 260 unmittelbar auf den Kolben 220 übertragen wird.

Zum Lösen setzt die Freigabekraft zunächst durch den in der hinteren Kammer 209 auf den Schubkolben 207 wirkenden Luftdruck ein, der erst bei Abschluß des Kanals 250 durch den vom Schubkolben 207 mitgenommenen Hilfskolben 240 durch den in der Hilfskammer 254 herrschenden Druck erhöht wird.

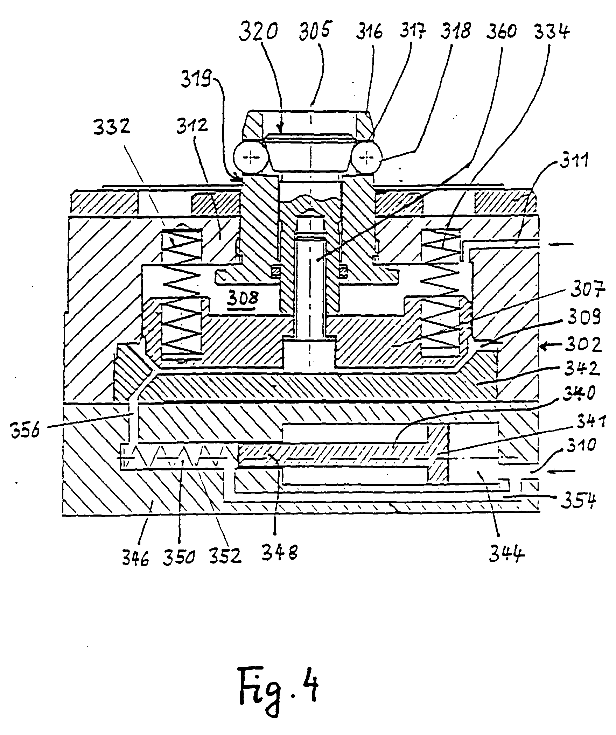

Bei der in Fig. 4 dargestellten weiteren Ausführungsform der Erfindung ist der Gehäuseblock 302 gegenüber seiner Stirnplatte 312 um einen Ansatz 346 in axialer Richtung verlängert, in welchem ein quer zur Mittellinie 305 des Gehäuseblocks 302 quer verschiebbarer Stempel 340 angeordnet ist. Der Stempel 340 ist mit seinem verbreiteten Kopf 341 in einer Ausnehmung 344 verschiebbar, deren Längsrichtung quer zur Mittellinie 305 liegt. Der vor der Stirnfläche des Kopfes 341 befindliche Teil der Ausnehmung 344 ist über einen Mediumkanal 310 mit dem Äußeren des Gehäuseblocks 302 verbunden. Das dem Kopf 341 gegenüberliegende schlanke Ende 348 des Stempels 340 ist in einer die Ausnehmung 344 fortsetzenden Blindbohrung 350 quer zur Mittellinie 305 verschiebbar, und zwar gegen die Wirkung relativ schwachen einer Druckfeder 352, die sich am toten Ende der Bohrung 350 abstützt.

Vom Mediumkanal 310 zweigt ein Mediumseitenkanal 354 ab, der sich parallel zur Längserstreckung der Ausnehmung 344 erstreckt und hinter dem Ende 348 des Stempels 340 in die Bohrung 350 mündet, wobei der Stempel 340 sich dann in einer in Fig. 4 dargestellten vorderen Ausgangslage befindet. Die Bohrung 350 ist über einen weiteren Mediumkanal 356 mit der hinteren Kmmer 309 verbunden und zweigt von der Bohrung 350 in der Nähe ihres blinden Endes ab.

Das Innere des Gehäuseblocks 302 ist durch einen Schubkolben 307 wieder in eine vordere Kammer 308 , die über einen Druckluftanschluß 311 mit einer Druckluftquelle verbindbar ist, und die erwähnte hintere Kammer 309 unterteilt, wobei der Schubkolben 307 längs der Innenwand des Mantels des Gehäuseblocks 302 gegen die Wirkung mehrerer, sich in der Stirnplatte 312 abstützenden Druckfedern 332, 334 axial verschiebbar ist. Der Schubkolben 307 ist über einen Bolzen 360 mit dem symmetrisch zur Mittellinie 305 angeordneten und in deren Richtung verschiebbaren Kolben 320 fest verbunden.

Im übrigen entsprechen die weiteren Einzelheiten der Ausführungsform der Erfindung nach Fig. 4 den im Zusammenhang mit Fig. 2 beschriebenen Merkmalen der Erfindung.

Der Schließdruck für die Kugelsperre 317, 318 wird einerseits durch die Druckfedern 332, 334 und andererseits durch der vorderen Kammer 308 zugeführte Druckluft erzeugt. Beim Schließen der Kugelsperre nimmt der Schubkolben 307 seine in Fig. 4 dargestellte untere Totpunktlage ein, bei der der Kopf des Bolzens 360 auf der den Innenraum des Gehäuseblocks 302 (bis auf den Mediumkanal 356) abschließenden Platte 342 aufliegt.

Zum Lösen oder Öffnen der Kugelsperre 317, 318 wird über den Mediumkanal 310 Druckluft zugeführt, deren voller Anfangsdruck über die Mediumkanäle 354, 350, 356 auf die Unterseite der Schubkolbens 307 wirkt und diesen gegen die Wirkung der Druckfedern 332, 334 axial anhebt. Dieser Öffnungsdruck wird durch den Stempel 340 in der Weise erhöht, daß der Stempel 340 aufgrund des vor der Stirnfläche seines Kopfes 341 herrschenden Druckes in der Ausnehmung 344 sowie in der Bohrung 350 bei der in Fig. 4 gewählten Darstellung nach links verschoben wird und hierbei den Mediumkanal 354 absperrt. Damit wirkt der volle Öffnungsdruck auf den Stempel 340, der aufgrund der kleineren Wirkfläche des Endes 348 verstärkt wird, so daß auf den Schubkolben 307 ein erhöhter Öffnungsdruck wirkt. Dieser hat eine solche Größe, daß irgendwelche an der Kugelsperre 317, 318 auftretende Verklemmungen mit Sicherheit gelöst werden.

Die Feder 352 dient lediglich dazu, den Stempel 340 aus einer den Kanal 354 abschließenden Stellung nach Reduzierung des Druckes der mit dem Mediumkanal zugeführten Druckluft wieder in die in Fig. 4 dargestellte Ausgangslage zurückzuschieben.

Es liegt selbstverständlich im Rahmen der Erfindung, als zweites Druckmittel statt der erwähnten Druckluft hydraulische Medien wie beispielsweise Öl oder Wasser, oder ein anderes Gas einzusetzen.

Ferner ist hervorzuheben, daß der in axialer Richtung genommene Weg des axial verschieblichen Teils der Membran 7 bzw. der Schubkolben 107, 207, 307 nur etwa 1 bis 3 mm beträgt, so daß der Gehäuseblock sehr flach gehalten werden kann, jedenfalls nur eine geringe Bauhöhe in axialer Richtung aufzuweisen braucht.

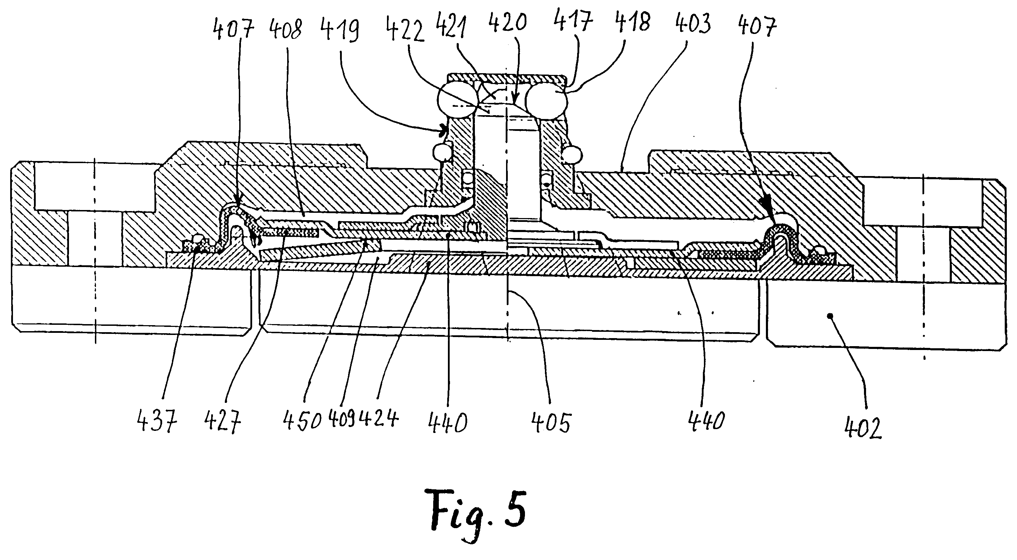

Schließlich zeigt Fig. 5 eine weitere Ausführungsform der Erfindung, bei der das Gehäuse 402 einen im wesentlichen zylindrischen Hohlraum 408, 409 umschließt. Der Hohlraum 408, 409 besitzt eine zentrale axiale Öffnung, in welche ein zylindrisches Rohrstück 419 fest eingesetzt ist. Das Rohrstück 419 erhebt sich über die Oberfläche 403 des Gehäuses 402 und weist am freien Ende umfangmäßig gleich verteilte Radialbohrungen 417 auf, wobei in jeder der Radialbohrungen je eine Kugel 418 eines Kugelgesperres radial beweglich eingefangen ist. In der Zentralbohrung des Rohrstückes 419 ist ein Kolben 420 axial verschieblich und dichtend angeordnet, der am freien Ende mit radial einwärts abgestuften Keilflächen 421, 422 versehen ist. Die Kugeln 418 des Kugelgesperres liegen radial an den Keilflächen 421, 422 an. An dem in den Hohlraum 408, 409 ragenden Fuß des zylindrischen Kolbens 420 ist eine scheibenförmige Platte 440 befestigt, welche den Hohlraum 408, 409 radial weitgehend ausfüllt. Eine ringförmige Gummimembran 407 ist längs ihres äußeren Randes 437 am Gehäuse 402 festgeklemmt und ihr innerer Rand 427 ist an dem Rand der Platte 440 befestigt. Durch die Membran 407 wird der Hohlraum in eine vordere Kammer 408 und eine hintere Kammer 409 unterteilt. Ein axial spreizender Federring 450 stützt sich an seinem äußeren Rand am Boden 424 der hinteren Kammer 409 ab und beaufschlagt mit seinem inneren Rand die Unterseite der Platte 440.

Nicht dargestellt sind ein erster in die vordere Kammer 408 mündender Druckmediumkanal, über welchen die vordere Kammer 408 aus einer externen Druckmediumquelle mit Druck beaufschlagt werden kann. Ferner ist nicht dargestellt ein weiterer, mit der hinteren Kammer 409 kommunizierender Druckmediumkanal, der über eine äußere Druckmediumquelle der hinteren Kammer 409 Mediumdruck zuführen kann.

Die Mittellinie 405 des Kolbens 420 ist zugleich die Richtung der Z-Achse.

Der linke Teil der Fig. 5 zeigt den Kolben 420 mit Platte 440 und Membranenrand 427 in einer durch die Wirkung des Federrings 450 angehobenen Stellung, in der die Kugeln 418 durch den Kolben 420 radial auswärts in einer ein Werkstück, beispielsweise eine Palette, haltenden Position, gedrängt sind. Die rechte Hälfte der Fig. 5 zeigt eine abgesenkte Stellung des Kolbens 420, die durch Druckbeaufschlagung der vorderen Kammer 408 gegen die Wirkung des Federrings 450 erreicht wird, so daß die Kugeln 418 des Kugelgesperres sich radial einwärts bewegen können und ein Lösen des Werkstückes von der Haltevorrichtung erlauben. Wie man erkennt, ist der untere Totpunkt des Kolbenhubes erreicht, wenn die Platte 440 auf dem Kammerboden 424 aufsitzt. Der obere Totpunkt des Kolbenhubes ist durch das Werkstück definiert, das nur eine begrenzte radiale Auswärtsbewegung der Kugeln 418 erlaubt.

## Patentansprüche

1. Haltevorrichtung mit an einem Gehäuse angeordneten, als lösbare Sperre wirkenden Klemmelementen (18, 118, 218, 318), die durch eine Axialbewegung eines Druckglieds (20, 120, 220, 320) radial bewegbar sind, wobei das sich in das Gehäuse erstreckende Druckglied von einem ersten und einem zweiten Druckmittel axial beaufschlagbar ist und das zweite Druckmittel auf das Druckglied entgegengesetzt zum ersten Druckmittel einwirkt, dadurch gekennzeichnet, daß in dem Gehäuse (2, 102, 202, 302) zwei durch eine abschnittsweise axial bewegliche und am Gehäuse verankerte Membran (7) getrennte und axial hintereinander angeordnete Kammern (8, 108, 208, 308; 9, 109, 209, 309) ausgebildet sind, wobei das Druckglied mit der Membran verbunden ist und wenigstens eine der Kammern (9, 109, 209, 309) an eine Mediumdruckquelle anschließbar ist.

2. Vorrichtung nach Anspruch 1,dadurch gekennzeichnet, daß das erste Druckmittel mehrere auf die Membran einwirkende in einer vorderen Kammer (8) angeordnete Druckfedern (32, 34) umfaßt.

3. Vorrichtung nach Anspruch 1 oder 2, dadurch gekennzeichnet, daß das erste Druckmittel ein in der vorderen Kammer (8) vorhandenes Druckmedium umfaßt, wobei die vordere Kammer (8) an eine Mediumdruckquelle anschließbar ist.

4. Vorrichtung nach einem der vorstehenden Ansprüche, dadurch gekennzeichnet, daß das Druckglied ein zweckmäßig zylindrischer Kolben (20, 120, 220, 320, 420) ist, dessen Schaft (26, 426) mit der Membran (7, 407) verbunden ist und dessen Kopf (24, 424) einen Konus aufweist, gegen welchen die Klemmelemente (18, 418) anliegen.

5. Vorrichtung nach einem der vorstehenden Ansprüche, dadurch gekennzeichnet, daß die Klemmelemente mehrere in Umfangsrichtung gleich verteilte Kugeln (18, 418) sind.

6. Vorrichtung nach einem der vorstehenden Ansprüche, dadurch gekennzeichnet, daß das Druckglied, insbesondere dessen Kopf (24) sowie die Klemmelemente (18) über die Stirnwand (12, 112, 212, 312) des Gehäuses (2) axial vorstehen.

7. Vorrichtung nach einem der vorstehenden Ansprüche, dadurch gekennzeichnet, daß das Druckglied (20, 420) in einem Rohrstück (19, 419) axial geführt ist, welches sich über das Gehäuse (2, 402) erhebt und in dem Gehäuse befestigt ist und in der Nähe seines freien Endes die Klemmelemente (18, 418) aufnimmt.

8. Vorrichtung nach einem der vorstehenden Ansprüche, dadurch gekennzeichnet, daß die Druckfedern (32, 34) sich an einem Rohrstück (19) abstützen, welches in einer Mittelbohrung der Stirnwand (12) gehalten ist und mehrere, die Klemmelemente (18) aufnehmende Radialbohrungen (17) aufweist.

9. Vorrichtung nach einem der vorstehenden Ansprüche, dadurch gekennzeichnet, daß an dem Fuß des Kolbens (420) eine scheibenförmige Platte (440) angebracht ist, welche die Kammern (408, 409) radial fast ganz ausfüllt, wobei die am Gehäuse (402) festgeklemmte, ringförmige Membran (407) am Rand der Platte (440) befestigt ist.

10. Vorrichtung nach Anspruch 10, dadurch gekennzeichnet, daß ein axial spreizender Federring (450) sich an der Unterseite der Platte (440) sowie an einem Kammerboden (430) abstützt.

11. Vorrichtung nach einem der vorstehenden Ansprüche, dadurch gekennzeichnet, daß die Membran aus einem flexiblen Kunststoff, beispielsweise Gummi, besteht.

12. Vorrichtung nach einem der vorstehenden Ansprüche, dadurch gekennzeichnet, daß die Membran (7) durch einen innerhalb des Gehäuses (102, 202, 302) axial verschlieblichen Schubkolben (107, 207, 307) ersetzt ist.

13. Vorrichtung nach Anspruch 12, dadurch gekennzeichnet, daß zwischen der Stirnplatte (112, 212, 312) des Gehäuses (102, 202, 302) und dem Schubkolben (107, 207, 307) mehrere Druckfedern (132, 134; 232, 234; 332, 334) angeordnet sind.

14. Vorrichtung nach einem der Ansprüche 12 oder 13, dadurch gekennzeichnet, daß der Schubkolben mit dem Schaft (126) des Kolbens (120, 220, 320) mittels eines Bolzens (127, 260, 360) verbunden ist.

15. Vorrichtung nach einem der Ansprüche 12 bis 14, dadurch gekennzeichnet, daß axial hinter dem Schubkolben (207, 307) ein Hilfskolben (240, 340) zur Druckerhöhung angeordnet ist, an dessen Vorderseite und an dessen Rückseite je eine Druckkammer (248, 254; 350, 344) ausgebildet ist.

16. Vorrichtung nach einem der Ansprüche 12 bis 15, dadurch gekennzeichnet, daß der Hilfskolben (240) mit dem Schubkolben (207) fest verbunden ist.

17. Vorrichtung nach Anspruch 16, dadurch gekennzeichnet, daß die vordere Kammer (208) über einen Mediumkanal (250) mit einer den Schließdruck erhöhenden Hilfskammer (248) vor der Stirnseite des Hilfskolben (240) kommuniziert.

18. Vorrichtung nach einem der Ansprüche 12 bis 17, dadurch gekennzeichnet, daß die hintere Kammer (209) über einen Hilfkanal (252) mit einer weiteren Hilfskammer (254) kommuniziert, welche an der Rückseite des Hilfskolben (240) ausgebildet ist.

19. Vorrichtung nach einem der Ansprüche 12 bis 18, dadurch gekennzeichnet, daß der Hilfskolben ein quer zur Mittellinie (305) des Gehäuses (302) verschiebbarer Stempel (340) ist, dessen schlanker Schaft (348) über einen Mediumkanal (350, 356) mit der hinteren Kammer (309) komminiziert und dessen verbreiterter Kopf mit der hinteren Kammer (309) über einen weiteren Mediumkanal (354) während des Öffnens der Kaltevorrichtung vorübergehend kommuniziert.
